# EUROPÄISCHE PATENTSCHRIFT

(11) **EP 2 399 019 B1**
(45) Veröffentlichungstag und Bekanntmachung des Hinweises auf die Patenterteilung: **17.04.2013**
(21) Anmeldenummer: 10702267.5
(22) Anmeldetag: 20.01.2010
(51) Int. Cl.: F02M 37/22, B01D 17/04

(54) **WASSERABSCHEIDER, INSBESONDERE FÜR KRAFTSTOFFZUFÜHRSYSTEME VON BRENNKRAFTMASCHINEN IN KRAFTFAHRZEUGEN**
WATER SEPARATOR, IN PARTICULAR FOR FUEL SUPPLY SYSTEMS OF INTERNAL COMBUSTION ENGINES IN MOTOR VEHICLES
SÉPARATEUR D'EAU, EN PARTICULIER POUR SYSTÈMES D'ALIMENTATION EN CARBURANT DE MOTEURS À COMBUSTION INTERNE DANS DES VÉHICULES À MOTEUR

(30) Priorität: 18.02.2009 DE 202009002303 U
(43) Veröffentlichungstag der Anmeldung: 28.12.2011
(73) Patentinhaber: MANN+HUMMEL GmbH, 71638 Ludwigsburg (DE)
(72) Erfinder: THIENEL, Michael, 95349 Thurnau (DE)
(74) Vertreter: Seyboth, Matthias
(86) Internationale Anmeldenummer: PCT/EP2010/050625
(87) Internationale Veröffentlichungsnummer: WO 2010/094529

(56) Entgegenhaltungen:
- EP-A2- 1 256 707
- WO-A1-2008/037561
- DE-A1- 2 918 216
- DE-A1-102006 005 108
- DE-U1-202007 007 120

## Beschreibung

### Technisches Gebiet

Die Erfindung betrifft einen Wasserabscheider, insbesondere für Kraftstoffzuführsysteme von Brennkraftmaschinen in Kraftfahrzeugen der im Oberbegriff des Anspruchs 1 angegebenen Gattung.

### Stand der Technik

Vorrichtungen zum Abscheiden von Wasser aus dem Kraftstoff in Kraftstoffzuführsystemen werden häufig mit einem Kraftstofffilter kombiniert. So ist aus der US 4,740,299 ein Kraftstofffilter bekannt, der in seinem Gehäuse einen Sammelraum für das aus dem Kraftstoff ausgeschiedene Wasser aufweist. Der Kraftstoff wird von oben in das Filtergehäuse zugeführt, wobei davon ausgegangen wird, dass die schwereren Wasseranteile im Kraftstoff nach unten sinken und in den Sammelraum gelangen. Ein Teil des im Kraftstoff emulgierten Wassers wird jedoch mit dem Kraftstoff durch das Filtermaterial getragen, so dass auch ausgangsseitig des Filters noch Wasser im Kraftstoff vorhanden ist.

In der EP 1 256 707 A2 ist ein Kraftstofffilter mit wasserabscheidenden Mitteln beschrieben. Dieser insbesondere für Dieselkraftstoffe eines Verbrennungsmotors dienende Kraftstofffilter umfasst zwei Filterstufen, wobei eine erste Filterstufe zur Partikelfiltration vorgesehen ist. Diese Filterstufe besteht aus einem hydrophilen Filtermaterial, welches die Eigenschaft besitzt, im Kraftstoff fein verteiltes Wasser zu größeren Wasserteilchenelementen koaleszieren zu lassen. In der ersten Filterstufe ist eine zweite Filterstufe aus einem hydrophoben Material nachgeschaltet, wobei sich diese zweite Filterstufe koaxial innerhalb der ersten Filterstufe befindet. Diese Anordnung ist deshalb gewählt, dass der die erste Filterstufe verlassende und Wasseranteile enthaltende Kraftstoff umlenkungsfrei auf das Material der letzten Filterstufe trifft. Für diese Art der Ausgestaltung eines Kraftstofffilters werden große Flächen des hydrophilen Materials der ersten Stufe sowie des hydrophoben Materials der zweiten Stufe benötigt. Ein Wasserabscheider nach dem Oberbegriff des Anspruchs 1 ist beispielsweise aus der DE 20 2007 007 120 U1 bekannt. Des Weiteren beschreibt die DE 10 2006 005 108 A1 einen Kraftstoffilter mit einen Ringfiltereinsatz und einer dem Ringfiltereinsatz nachgeschalteten Abscheideeinrichtung, welche einen durch eine Schikane von einer Sedimentationskammer für abgeschiedenes Wasser getrennten Abscheideraum aufweist.

Der vorliegenden Erfindung liegt die Aufgabe zugrunde, einen Wasserabscheider der gattungsgemäßen Art zu schaffen, der einfach im Aufbau ist und mit dem eine effiziente Wasserabscheidung erreicht wird. Diese Aufgabe wird durch einen Wasserabscheider mit den Merkmalen des Anspruchs 1 gelöst.

### Offenbarung der Erfindung

Durch die Gestaltung des Gehäuses als rohrförmigen Körper mit einer horizontalen Längsachse und sich in Richtung der Längsachse erstreckender Trennwand werden auf einfache Weise eine Abscheidekammer und ein darunter liegender Sammelraum gebildet, wobei in der Abscheidekammer das Rohrelement angeordnet wird, das sich parallel zur Trennwand erstreckt. Gemäß einer zweckmäßigen Weiterbildung weist das Gehäuse eine quer zur Längsrichtung verlaufende Teilungsebene auf, an der Gehäuseteile dichtend zusammengefügt sind, wobei die Teilungsebene vorzugsweise benachbart dem Zulauf angeordnet ist. Auf diese Weise besteht das Gehäuse aus lediglich zwei Teilen, die auf einfache Weise durch ein Spritzgussverfahren herstellbar sind. Dabei können die Gehäuseteile aus Metall oder bevorzugt aus Kunststoff hergestellt werden. Die Lage der Teilungsebene nahe dem Zulauf hat den Vorteil, dass eines der Gehäuseteile das Abscheideelement mindestens annähernd vollständig aufnimmt, wohingegen das andere Gehäuseteil lediglich einen Deckel darstellt, der gegebenenfalls auch Positionierungsmittel zur Lagefixierung des Abscheideelementes aufweisen kann.

Zweckmäßigerweise erstreckt sich die Trennwand von einem rückwärtigen Ende des Gehäuses in Richtung auf ein vorderes Ende des Gehäuses, wobei nahe dem vorderen Ende eine Durchtrittsöffnung zwischen Abscheidekammer und Sammelraum gebildet ist. Auf diese Weise entstehen keine Toträume für Verwirbelungen in dem den Kraftstoff führenden Bereich und es wird eine Vermischung von Kraftstoff und bereits abgeschiedenem Wasser, das im Sammelraum befindlich ist, vermieden. Vorteilhafterweise erstreckt sich die Trennwand bis zu der Teilungsebene. Dadurch ist eine ausreichende Längserstreckung der Trennwand gegeben, die sich auch über die Länge des Abscheideelementes erstreckt, und die Durchtrittsöffnung befindet sich damit in einem Bereich, der nicht vom Kraftstoff durchströmt, sondern strömungsberuhigt ist.

Gemäß einer weiteren Ausgestaltung der Erfindung sind der Zulauf und der Ablauf in einer gleichen Richtung an entgegengesetzten Enden des rohrförmigen Körpers und koaxial zum Rohrelement angeordnet. Auf diese Weise ist lediglich eine geringe Strömungsumlenkung erforderlich auf der Gesamtstrecke von Zulauf zu Ablauf. Das Rohrelement kann sich dabei von dem Zulauf bis zum Ablauf erstrecken und als ein Bauteil bei der Montage des Wasserabscheiders in das Gehäuse eingesetzt werden.

Das Abscheideelement umfasst zweckmäßigerweise zwei Abscheidestufen, wobei die erste Abscheidestufe koaleszierend und die zweite Abscheidestufe hydrophob ist. Durch die erste koaleszierend wirkende Abscheidestufe werden Wassertropfen gebildet, die auf Grund ihrer Schwerkraft nach unten in Richtung auf die Trennwand sinken und entlang der Trennwand in Richtung auf die Öffnung zum Durchtritt in die Sammelkammer bewegt werden. Die zweite Abscheidestufe aus einem hydrophoben Material hält noch in dem Kraftstoff enthaltene Wasseranteile oder auch mitgeführte Wassertröpfchen zurück, so dass an der zweiten Abscheidestufe lediglich Kraftstoff durchtreten kann. Die zweite Abscheidestufe besteht aus einem stromab der ersten Abscheidestufe und vor dem Ablauf angeordneten Abscheidevlies, das eine Maschenweite zwischen 5 µm und 500 µm aufweist.

Ein einfacher Aufbau des Rohrelementes wird dadurch erreicht, dass dieses einen Stützkörper umfasst, der an seiner Mantelfläche von einem Abscheidemedium umgeben ist, das die Öffnungen im Rohrelement überdeckt. Dabei sind vorzugsweise die Öffnungen im Stützkörper des Rohrelementes als Längsschlitze ausgebildet. Zur Befestigung des Stützkörpers im Gehäuse und zur gleichzeitigen Abdichtung wird vorgeschlagen, dass der Stützkörper mit einem zulaufseitigen Ende in einem Stutzen aufgenommen ist, der im Gehäuse ausgebildet ist und sich vorzugsweise koaxial zum Zulauf erstreckt. Um den Kraftstoff durch die erste Abscheidestufe zu führen, ist in dem Stützkörper im Bereich des ablaufseitigen Endes des Abscheidemediums der ersten Abscheidestufe eine radiale Trennwand angeordnet. Dadurch ist eine Strömung des Kraftstoffs durch die erste Abscheidestufe erzwungen.

Außerdem ist es vorteilhaft, dass das Rohrelement einen sich auf der anderen Seite der Trennwand an den Stützkörper anschließenden Rohrabschnitt aufweist, in dem radiale Aussparungen vorgesehen sind. Durch diese radialen Aussparungen kann der Kraftstoff in den Rohrabschnitt eintreten, wobei der Rohrabschnitt im Bereich der Aussparungen von einem Abscheidevlies umgeben ist, das die zweite Abscheidestufe bildet. Um an diesem Ende eine besonders zweckmäßige Fixierung des Rohrelementes zu erreichen, ist es von Vorteil, dass ein dem Ablauf benachbartes Ende des Rohrabschnitts in einem im Gehäuse ausgebildeten Stutzen aufgenommen ist, der sich vorzugsweise koaxial zum Ablauf erstreckt.

Vorteilhaft ist auch, dass das Material der ersten Abscheidestufe ein engmaschiges Sieb, Lochblech oder Gewebe ist. Dieses Material der ersten Abscheidestufe kann auf einfache Weise von zwei zusammenfügbaren flüssigkeitsdurchlässigen Halbschalen umgeben und durch diese an dem Stützkörper befestigt sein. Die Halbschalen besitzen gemeinsam etwa die Form eines Zylinders und bestimmen damit den Außendurchmesser des Rohrelementes, wodurch lediglich ein geringer Querschnittsbedarf in dem Gehäuse besteht. Die Halbschalen sind vorzugsweise mittels Rast- oder Clipsverbindungen miteinander verbunden, wobei das Stützelement zwischen den Rändern der Halbschalen eingespannt ist. Auf diese Weise ist eine Fixierung der ersten Abscheidestufe auf dem Stützelement gegeben.

Um die Anzahl der erforderlichen Einzelteile möglichst gering zu halten und die Montage zu vereinfachen, ist es von Vorteil, dass das Stützelement mit der Trennwand und dem Rohrabschnitt als einstückiges Kunststoffteil ausgeführt ist. Dadurch werden Arbeitsvorgänge bezüglich der Herstellung und Montage eingespart. Damit eine möglichst gleichmäßige Beaufschlagung der ersten Abscheidestufe über deren gesamte Länge erfolgt, ist es zweckmäßig, in dem Stützkörper ein Element zur Strömungsführung anzuordnen, durch das der Strömungsquerschnitt innerhalb des Stützkörpers in Strömungsrichtung reduziert wird.

### Kurze Beschreibung der Zeichnungen

Ausführungsbeispiele der Erfindung sind nachstehend anhand der Zeichnung näher erläutert. In der Zeichnung zeigt:
- Figur 1: einen Längsschnitt durch ein als rohrförmiger Körper gestaltetes Gehäuse mit Abscheidekammer und Sammelraum,
- Figur 2: eine Darstellung mehrerer Komponenten eines Abscheideelementes, teilweise in Explosionsdarstellung,
- Figur 3: eine Ausführungsvariante zu Figur 2,
- Figur 4: einen Längsschnitt durch einen Wasserabscheider.

### Ausführungsform(en) der Erfindung

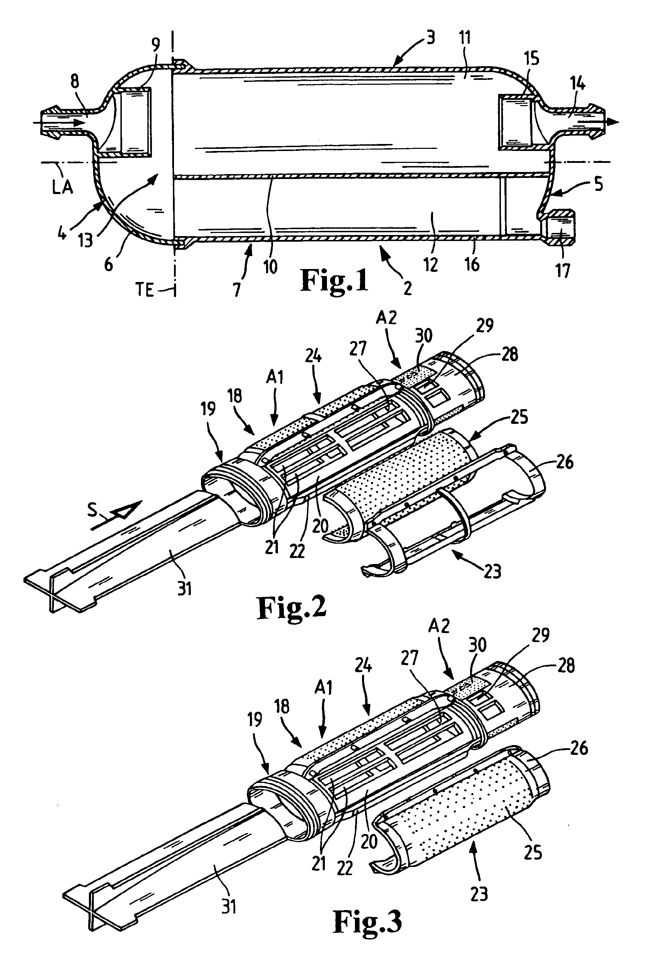

In Fig. 1 ist ein Gehäuse 2 dargestellt, das im Wesentlichen als rohrförmiger Körper 3 gestaltet ist, der eine Längsrichtung LA aufweist und an Enden 4, 5 jeweils etwa kugelabschnittförmig ausgebildet ist. Das Gehäuse 2 weist quer zur Längsrichtung LA eine Teilungsebene TE auf, so dass zwei Gehäuseteile 6, 7 durch Zusammenfügen an der Teilungsebene TE den rohrförmigen Körper 3 bilden. Die Teilungsebene TE liegt benachbart zu einem Zulauf 8, so dass das Gehäuseteil 6 etwa nur den Kugelabschnitt des Endes 4 umfasst, wohingegen das Gehäuseteil 7 den Hauptbestandteil des rohrförmigen Körpers 3 bildet. An der Innenseite des Gehäuseteils 6 ist ein Stutzen 9 angeordnet, der sich im Wesentlichen koaxial zum Zulauf 8 erstreckt und einstückig mit dem Gehäuseteil 6 ausgebildet ist.

Am anderen Ende 5 des Gehäuses 2 ist eine sich in Längsrichtung LA erstreckende Trennwand 10 angebracht, die etwas unterhalb der Mitte bis zur Trennebene TE verläuft. Die Trennwand 10 unterteilt auf diese Weise den Innenraum des Gehäuses 2 in eine Abscheidekammer 11 und einen Sammelraum 12, wobei lediglich im Bereich des Gehäuseteils 6 eine Öffnung 13 zur Verbindung zwischen Abscheidekammer 11 und Sammelraum 12 gegeben ist. Am Ende 5 befindet sich ein Ablauf 14 für den Kraftstoff, der in derselben Richtung wie der Zulauf 8 am anderen Ende 4 verläuft. An der Innenseite des Gehäuseteils 7 ist ein Stutzen 15 angeordnet, der sich mindestens annähernd koaxial zum Ablauf 14 erstreckt. An dem Gehäuseteil 7 ist an dem Ende 5 unterhalb des Ablaufs 14 unmittelbar über einem Boden 16 des Sammelraums 12 ein Wasserablaufstutzen 17 angeordnet. Das Gehäuseteil 7 ist vorzugsweise einstückig als Spritzgussteil mit der Trennwand 10, dem Ablauf 14, dem Stutzen und dem Wasserablaufstutzen 17 ausgeführt. Die Gehäuseteile 6, 7 bestehen bevorzugt aus Kunststoff und sind im Bereich der Trennebene verschweißt, wodurch eine dichte Verbindung erreicht wird, die resistent gegen Kraftstoff ist.

Fig. 2 zeigt ein Abscheideelement 18, das aus mehreren Komponenten besteht, wobei zum besseren Verständnis die Komponenten teilweise in Explosionsdarstellung gezeigt sind. Das Abscheidelement 18 ist als Rohrelement 19 konzipiert, und zwar im Hinblick auf eine liegende Anordnung in der in Fig. 1 dargestellten Abscheidekammer 11 im Gehäuse 2. Das Rohrelement 19 umfasst einen Stützkörper 20, an dem radiale Öffnungen 21 in Form von Längsschlitzen ausgebildet sind. Der Stützkörper 20 ist über die Länge der Längsschlitze von einem Abscheidemedium 22 umgeben, wodurch eine erste Abscheidestufe A1 gebildet wird. Das Abscheidemedium 22, bei dem es sich beispielsweise um ein engmaschiges Sieb, Lochblech oder mehrlagiges Gewebe handelt, ist mittels Halbschalen 23, 24 einer zylindrischen Form an dem Stützkörper 20 befestigt.

Die Halbschalen 23, 24 bestehen aus einem dünnwandigen, zu einem Halbzylinder 25 geformten, gelochten Material und einem Rahmen 26, der sich über die Ränder des Halbzylinders 25 erstreckt. An den beiden Rahmen 26 können Clipse oder Rasten vorgesehen sein, um die beiden Halbschalen 23, 24 zu Verbinden und somit eine Befestigung auf dem Stützkörper 20 zu bewirken. Die Fertigung der Halbschalen 23, 24 jeweils aus zwei separaten Teilen, nämlich dem Halbzylinder 25 und dem Rahmen 26, bietet die Möglichkeit der Materialkombination aus Kunststoff und Metall, die Halbschalen können aber auch materialeinheitlich hergestellt sein.

In dem Stützkörper 20 ist eine quer zu dessen Längsrichtung stehende Trennwand 27 angeordnet, die sich in geringem Abstand zu dem in Strömungsrichtung S des Kraftstoffs hinteren Ende der Öffnungen 21 befindet. In den Innenraum des Stützkörpers 20 wird ein Element 31 zur Strömungsführung eingesetzt, das so weit in den Stützkörper 20 eingeschoben wird, bis es an der Trennwand 27 anliegt. Das Element 31 ist so gestaltet, dass der Strömungsquerschnitt innerhalb des Stützkörpers 20 in Strömungsrichtung S reduziert wird. Auf diese Weise ergibt sich eine gleichmäßige Beaufschlagung der ersten Abscheidestufe A1 über deren gesamte Länge.

Hinter dem Stützkörper 20 schließt sich auf der anderen Seite der Trennwand 27 ein Rohrabschnitt 28 an, in dem radiale Aussparungen 29 vorgesehen sind. Der Rohrabschnitt 28 ist von einem Abscheidevlies 30, das die Aussparungen 29 überspannt, umgeben. Das Abscheidevlies 30 besteht aus einem hydrophoben Material und bildet auf diese Weise eine zweite Abscheidestufe A2. Die Maschenweite des Abscheidevlieses 30 kann beispielsweise zwischen 5 µm und 500 µm betragen.

In Fig. 3 ist eine Ausführungsvariante zu Fig. 2 gezeigt mit einem Abscheideelement 18, das sich von demjenigen der Fig. 2 dadurch unterscheidet, dass die Halbzylinder 25 und Rahmen 26 der Halbschale 23 einerseits und Halbschale 24 andererseits einstückig ausgebildet sind und somit auch materialeinheitlich entweder aus Kunststoff oder Metall bestehen. Alle übrigen Merkmale in Fig. 3 stimmen mit denjenigen der Fig. 2 überein, so dass für gleiche Teile auch die Bezugszeichen identisch sind.

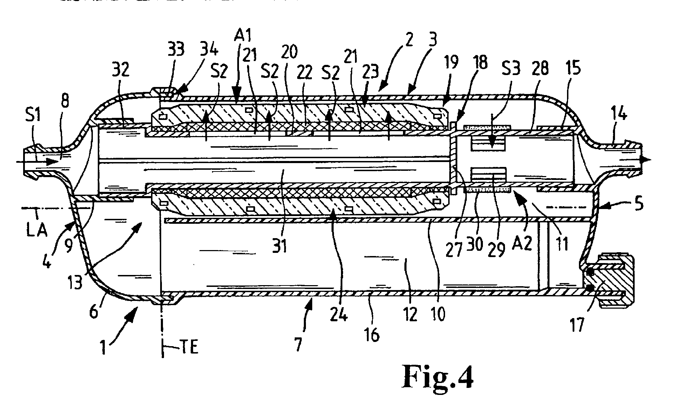

Die Fig. 4 zeigt einen Längsschnitt durch einen fertig montierten Wasserabscheider 1. Dabei besteht das Gehäuse 2 aus dem Gehäuseteil 6, 7, die den rohrförmigen Körper 3 bilden, dessen Innenraum durch die in Längsrichtung LA des Gehäuses 2 verlaufende Trennwand 10 in die Abscheidekammer 11 und den Sammelraum 12 unterteilt ist. In der Abscheidekammer 11 befindet sich das Abscheideelement 18 in Form eines Rohrelementes 19. Das Rohrelement 19 umfasst den Stützkörper 20 und den Rohrabschnitt 28, die fluchtend hintereinander angeordnet sind. An dem in Fig. 4 linken Ende des Stützkörpers 20 ist eine Hülse 32 angeformt, die bezüglich ihres Außenumfangs auf das Innenmaß des Stutzens 9 am Zulauf 8 abgestimmt und in diesem aufgenommen ist. Das rechte Ende des Rohrabschnitts 28 ist dem Innenmaß des Stutzens 15 am Ablauf 14 angepasst und in diesem gehalten.

Die Montage des Rohrelementes 19 in dem Gehäuse 2 ist auf einfache Weise möglich, indem zunächst das fertige Abscheideelement 18 mit seinem vorderen Ende des Rohrabschnitts 28 voraus in die Abscheidekammer 11 eingeführt und in den Stutzen 15 gesteckt wird. Sofern erforderlich, sind Maßnahmen zur radialen Abdichtung zwischen dem Stutzen 15 und dem Rohrabschnitt 28 vorzusehen. Danach wird das Gehäuseteil 6 in Richtung auf das Gehäuseteil 7 zugeführt und der Stutzen 9 am Einlass 8 auf die Hülse 32 gesteckt, wobei ebenfalls Maßnahmen zur radialen Abdichtung getroffen werden können. Das Gehäuseteil 6 wird soweit in Richtung auf das Gehäuseteil 7 bewegt, bis ein vorderer Rand 33 des Gehäuseteils 6 in einer Nut 34 des Gehäuseteils 7 greift und dichtend mit diesem verbunden wird. Zwischen der ersten Abscheidestufe A1 und dem Gehäuseteil 7 sowie der Trennwand 20 verbleibt ein Ringraum, der eine ausreichende Durchströmung gewährleistet. Alle weiteren Bezugszeichen in Fig. 4 stimmen für gleiche Teile mit denjenigen der Fig. 1 bis 3 überein.

Der Kraftstoff strömt in den Wasserabscheider 1 durch den Einlass 8 in Richtung des Pfeils S1 und gelangt durch die Hülse 32 in den Innenraum des Stützkörpers 20. Wegen der Trennwand 27 tritt der Kraftstoff gemäß Pfeil S2 durch die als Langlöcher gestalteten Öffnungen 21 (vgl. auch Fig. 2 und 3) und weiter in radialer Richtung durch das Abscheidemedium 22 und die Halbschalen 23, 24 in den zwischen den Halbschalen und der Innenwand des Gehäuseteils 7 sowie der Trennwand 10 gebildeten Ringraum. Für eine gleichmäßige Beaufschlagung der ersten Abscheidestufe A1 sorgt das Element 31 zur Strömungsführung im Innenraum des Stützkörpers 20. Beim Durchtritt des Kraftstoffs mit den darin emulgierten Wasseranteilen durch das Abscheidemedium 22, das eine koaleszierende Wirkung hat, werden Wassertropfen gebildet, die auf Grund der horizontalen Anordnung des Gehäuses 2 auf die Trennwand 10 absinken. Die Wassertropfen werden entlang der Trennwand 10 geführt und gelangen durch die Öffnung 13 in den Sammelraum 12.

Der durch die Abscheidestufe A1 im Wesentlichen von den Wasserbestandteilen getrennte Kraftstoff strömt auf Grund der Saugwirkung am Ablauf 14 in den Rohrabschnitt 28, und zwar durch das die zweite Abscheidestufe A2 bildende Abscheidevlies 30 und die radialen Aussparungen 29 gemäß Pfeil S3. Da das Material des Abscheidevlies 30 eine hydrophobe Wirkung hat, werden Wasseranteile, die noch im Kraftstoff emulgiert sind, und auch bereits gebildete Wassertropfen, welche durch die Strömung mitgeführt werden, an dem Abscheidevlies 30 zurückgehalten, so dass ausschließlich Kraftstoffanteile in den Rohrabschnitt 28 und zum Ablauf 14 gelangen. Das im Sammelraum 12 gesammelte Wasser kann durch an sich bekannte Einrichtungen, die am Wasserablassstutzen 17 anschließbar sind, entfernt werden.

## Patentansprüche

1. Wasserabscheider (1), insbesondere für Kraftstoffzuführsysteme von Brennkraftmaschinen in Kraftfahrzeugen mit einer in einem Gehäuse (2) ausgebildeten Abscheidekammer (11), einem darin angeordneten Abscheideelement (18) und einem darunter angeordneten Sammelraum (12) für aus dem Kraftstoff abgeschiedenes Wasser sowie einem Zulauf (8) und einem Ablauf (14) für den Kraftstoff, wobei das Gehäuse (2) im Wesentlichen als rohrförmiger Körper (3) mit einer horizontalen Längsachse (LA) gestaltet ist, und wobei das Abscheideelement (18) ein horizontal in der Abscheidekammer (11) liegendes Rohrelement (19) mit radialen Öffnungen (21) umfasst, durch die der Kraftstoff geführt wird, **dadurch gekennzeichnet, dass** sich in Richtung der Längsachse (LA) eine Trennwand (10) erstreckt, die die Abscheidekammer (11) von dem Sammelraum (12) trennt, wobei das Rohrelement (19) sich mindestens annähernd parallel zur Trennwand (10) erstreckt.

2. Wasserabscheider nach Anspruch 1, **dadurch gekennzeichnet, dass** das Gehäuse (2) eine quer zur Längsrichtung (LA) verlaufende Teilungsebene (TE) aufweist, an der Gehäuseteile (6, 7) dichtend zusammengefügt sind, wobei die Teilungsebene (TE) vorzugsweise benachbart dem Zulauf (8) angeformt ist.

3. Wasserabscheider nach Anspruch 1 oder 2, **dadurch gekennzeichnet, dass** die Trennwand (10) sich von einem rückwärtigen Ende (5) des Gehäuses (2) in Richtung auf ein vorderes Ende (4) des Gehäuses (2) erstreckt, wobei nahe des vorderen Endes (4) eine Durchtrittsöffnung (13) zwischen Abscheidekammer (11) und Sammelraum (12) gebildet ist.

4. Wasserabscheider nach Anspruch 2 und 3, **dadurch gekennzeichnet, dass** sich die Trennwand (10) bis zu der Teilungsebene (TE) erstreckt.

5. Wasserabscheider nach einem der Ansprüche 1 bis 4, **dadurch gekennzeichnet, dass** der Zulauf (8) und der Ablauf (14) in einer gleichen Richtung an entgegengesetzten Enden (4, 5) des rohrförmigen Körpers (3) und koaxial zum Rohrelement (19) angeordnet sind.

6. Wasserabscheider nach einem der Ansprüche 1 bis 5, **dadurch gekennzeichnet, dass** das Abscheideelement (18) zwei Abscheidestufen (A1, A2) umfasst, wobei die erste Abscheidestufe (A1) koaleszierend und die zweite Abscheidestufe (A2) hydrophob ist, wobei insbesondere die zweite Abscheidestufe (A2) aus einem stromab der ersten Abscheidestufe (A1) und vor dem Ablauf (14) angeordneten Abscheidevlies (30) gebildet ist, das eine Maschenweite zwischen 5 µm und 500 µm aufweist.

7. Wasserabscheider nach einem der Ansprüche 1 bis 6, **dadurch gekennzeichnet, dass** das Rohrelement (19) einen Stützkörper (20) umfasst, der an seiner Mantelfläche von einem Abscheidemedium (22) umgeben ist, das die Öffnungen (21) im Rohrelement (19) überdeckt, wobei insbesondere die Öffnungen im Stützkörper (20) des Rohrelementes (19) als Längsschlitze (21) ausgebildet sind.

8. Wasserabscheider nach Anspruch 7, **dadurch gekennzeichnet, dass** der Stützkörper (20) mit einem zulaufseitigen Ende (32) in einem Stutzen (9) aufgenommen ist, der im Gehäuse (2) ausgebildet ist und sich vorzugsweise koaxial zum Zulauf (8) erstreckt.

9. Wasserabscheider nach einem der Ansprüche 7 oder 8, **dadurch gekennzeichnet, dass** in dem Stützkörper (20) im Bereich des ablaufseitigen Endes des Abscheidemediums (22) der ersten Abscheidestufe (A1) eine radiale Trennwand (27) angeordnet ist.

10. Wasserabscheider nach Anspruch 9, **dadurch gekennzeichnet, dass** das Rohrelement (19) einen sich auf der anderen Seite der Trennwand (27) an den Stützkörper (20) anschließenden Rohrabschnitt (28) aufweist, in dem radiale Aussparungen (29) vorgesehen sind.

11. Wasserabscheider nach Anspruch 6 und 10, **dadurch gekennzeichnet, dass** der Rohrabschnitt (28) im Bereich der Aussparungen (29) vom Abscheidevlies (30) umgeben ist.

12. Wasserabscheider nach Anspruch 10 oder 11, **dadurch gekennzeichnet, dass** ein dem Ablauf (14) benachbartes Ende des Rohrabschnitts (28) in einem im Gehäuse (2) ausgebildeten Stutzen (15) aufgenommen ist, der sich vorzugsweise koaxial zum Ablauf (14) erstreckt.

13. Wasserabscheider nach einem der Ansprüche 6 bis 12, **dadurch gekennzeichnet, dass** das Material der ersten Abscheidestufe (A1) ein engmaschiges Sieb, Lochblech oder Gewebe ist.

14. Wasserabscheider nach einem der Ansprüche 7 bis 13, **dadurch gekennzeichnet, dass** in dem Stützkörper (20) ein Element (31) zur Strömungsführung angeordnet ist, durch das der Strömungsquerschnitt innerhalb des Stützkörpers (20) in Strömungsrichtung (S) reduziert wird.

15. Wasserabscheider nach einem der Ansprüche 1 bis 14, **dadurch gekennzeichnet, dass** an dem Ende (5) des Gehäuses (2), an dem sich der Ablauf (14) für den Kraftstoff befindet, unmittelbar über einem Boden (16) des Sammelraums (12) ein Wasserablassstutzen (17) angeordnet ist.

## Claims

1. Water separator (1), in particular for fuel delivery systems of internal combustion engines in motor vehicles with a separating chamber (11) realized in a housing (2), a separating element (18) disposed therein and a collecting chamber (12) disposed thereunder for water separated from the fuel as well as with an inlet (8) and an outlet (14) for the fuel, the housing (2) being designed substantially as tubular body (3) with a horizontal longitudinal axis (LA), and the separating element (18) comprising a pipe element (19) horizontally placed in the separating chamber (11) with radial openings (21) through which the fuel is guided, **characterized in that** a separating wall (10) that separates the separating chamber (11) from the collecting chamber (12) extends in the direction of the longitudinal axis (LA), the pipe element (19) extending at least approximately parallel to the separating wall (10).

2. Water separator according to claim 1, **characterized in that** the housing (2) features a separating plane (TE) running transversely in the longitudinal direction (LA) at which housing components (6, 7) are sealingly joined, the separating plane (TE) being preferably integrally molded adjacently to the inlet (8).

3. Water separator according to claim 1 or 2, **characterized in that** the separating wall (10) extends from a rear end (5) of the housing (2) in the direction of a front end (4) of the housing (2), a lead-through opening (13) being formed near the front end (4) between separating chamber (11) and collecting chamber (12).

4. Water separator according to claims 2 and 3, **characterized in that** the separating wall (10) extends up to the separating plane (TE).

5. Water separator according to one of the claims 1 to 4 **characterized in that** the inlet (8) and the outlet (14) are disposed in a same direction at opposite ends (4, 5) of the tubular body (3) and coaxially in relation to the pipe element (19).

6. Water separator according to one of the claims 1 to 5, **characterized in that** the separating element (18) comprises two separating stages (A1, A2), the first separating stage (A1) being coalescent and the second separating stage (A2) being hydrophobic, the second separating stage (A2) being in particular formed by a separating fleece (30) disposed downstream of the first separating stage (A1) and upstream of the outlet (14) and which features a mesh size between 5 µm and 500 µm.

7. Water separator according to one of the claims 1 to 6, **characterized in that** the pipe element (19) comprises a support structure (20) that is surrounded at its outside surface by a separating medium (22) that covers the openings (21) in the pipe element (19), in particular the openings in the support structure (20) of the pipe element (19) being designed as longitudinal slots (21).

8. Water separator according to claim 7, **characterized in that** the support structure (20) is incorporated with an inlet-sided end (32) in a connecting piece (9) which is realized in the housing (2) and extends preferably coaxially in relation to the inlet (8).

9. Water separator according to one of the claims 7 or 8, **characterized in that** a radial separating wall (27) is disposed in the support structure (20) in the area of the outlet-sided end of the separating medium (22) of the first separating stage (A1).

10. Water separator according to claim 9, **characterized in that** the pipe element (19) features a pipe section (28) in which radial recesses (29) are provided and which is adjacently positioned on the support structure (20) at the other side of the separating wall (27).

11. Water separator according to claims 6 and 10, **characterized in that** the pipe section (28) is surrounded in the area of the recesses (29) by the separating fleece (30).

12. Water separator according to claim 10 or 11, **characterized in that** an end of the pipe section (28) adjacent to the outlet (14) is incorporated in a connecting piece (15) which is realized in the housing (2) and extends preferably coaxially in relation to the outlet (14).

13. Water separator according to one of the claims 6 to 12, **characterized in that** the material of the first separating stage (A1) is a close-meshed sieve, perforated plate or fabric.

14. Water separator according to one of the claims 7 to 13, **characterized in that** an element (31) is disposed in the support structure (20) to guide the flow by means of which the flow cross-section within the support structure (20) is reduced in flow direction (S).

15. Water separator according to one of the claims 1 to 14, **characterized in that** at the end (5) of the housing (2), at which is disposed the outlet (14) for the fuel, a water outlet sleeve (17) is disposed immediately above a bottom (16) of the collecting chamber (12).

## Revendications

1. Séparateur d'eau (1), notamment pour des systèmes d'alimentation en carburant de moteurs à combustion interne dans des véhicules automobiles, avec une chambre de séparation (11) réalisée dans un boîtier (2), un élément séparateur (18) placé à l'intérieur de cette chambre et un espace collecteur (12) disposé en dessous et destiné à collecter l'eau séparée du carburant, ainsi qu'avec une entrée (8) et une sortie (14) pour le carburant, le boîtier (2) étant essentiellement formé en tant que corps tubulaire (3) doté d'un axe longitudinal horizontal (LA), et l'élément séparateur (18) comprenant un élément tubulaire (19) disposé à l'horizontale dans la chambre de séparation (11) et pourvu d'ouvertures radiales (21) à travers lesquelles le carburant est acheminé, **caractérisé en ce qu'**une paroi de séparation (10), qui sépare la chambre de séparation (11) de l'espace collecteur (12), s'étend en direction de l'axe longitudinal (LA), l'élément tubulaire (19) évoluant, tout au moins approximativement, de manière parallèle à la paroi de séparation (10).

2. Séparateur d'eau selon la revendication 1, **caractérisé en ce que** le boîtier (2) fait preuve d'un plan de séparation (TE) évoluant de manière transversale au sens longitudinal (LA) sur lequel des parties de boîtier (6, 7) sont assemblées de façon étanche, le plan de séparation (TE) étant de préférence moulé à proximité de l'entrée (8).

3. Séparateur d'eau selon la revendication 1 ou 2, **caractérisé en ce que** la paroi de séparation (10) s'étend d'une extrémité arrière (5) du boîtier (2) vers une extrémité avant (4) du boîtier (2), une ouverture de passage (13) étant formée, à proximité de l'extrémité avant (4), entre la chambre de séparation (11) et l'espace collecteur (12).

4. Séparateur d'eau selon les revendications 2 et 3, **caractérisé en ce que** la paroi de séparation (10) s'étend jusqu'au plan de séparation (TE).

5. Séparateur d'eau selon l'une des revendications 1 à 4, **caractérisé en ce que** l'entrée (8) et la sortie (14) sont placées dans la même direction à des extrémités opposées (4, 5) du corps tubulaire (3) et de manière coaxiale par rapport à l'élément tubulaire (19).

6. Séparateur d'eau selon l'une des revendications 1 à 5, **caractérisé en ce que** l'élément séparateur (18) comprend deux niveaux de séparation (A1, A2), le premier niveau de séparation (A1) étant coalescent et le deuxième niveau de séparation (A2) étant hydrophobe, le deuxième niveau de séparation (A2) notamment étant constitué d'un non-tissé de séparation (30) disposé en aval du premier niveau de séparation (A1) et en amont de la sortie (14) et doté de mailles d'une taille comprise entre 5 µm et 500 µm.

7. Séparateur d'eau selon l'une des revendications 1 à 6, **caractérisé en ce que** l'élément tubulaire (19) comprend un élément d'appui (20) dont la surface est entourée d'un milieu de séparation (22) qui recouvre les ouvertures (21) de l'élément tubulaire (19), les ouvertures de l'élément d'appui (20) de l'élément tubulaire (19) étant notamment exécutées en tant que fentes longitudinales (21).

8. Séparateur d'eau selon la revendication 7, **caractérisé en ce qu'**une extrémité côté entrée (32) de l'élément d'appui (20) est logée dans une tubulure (9) qui est formée dans le boîtier (2) et qui s'étend de préférence de manière coaxiale par rapport à l'entrée (8).

9. Séparateur d'eau selon l'une des revendications 7 ou 8, **caractérisé en ce qu'**une paroi de séparation radiale (27) est placée dans l'élément d'appui (20) à proximité de l'extrémité côté sortie du milieu de séparation (22) du premier niveau de séparation (A1).

10. Séparateur d'eau selon la revendication 9, **caractérisé en ce que** l'élément tubulaire (19) présente une section de tube (28) raccordée à l'élément d'appui (20) de l'autre côté de la paroi de séparation (27) et dans laquelle sont prévus des évidements radiaux (29).

11. Séparateur d'eau selon les revendications 6 et 10, **caractérisé en ce que** la section de tube (28) est entourée du non-tissé de séparation (30) à proximité des évidements (29).

12. Séparateur d'eau selon la revendication 10 ou 11, **caractérisé en ce qu'**une extrémité de la section de tube (28) voisine à la sortie (14) est logée dans une tubulure (15) formée dans le boîtier (2) et s'étendant de préférence de manière coaxiale par rapport à la sortie (14).

13. Séparateur d'eau selon l'une des revendications 6 à 12, **caractérisé en ce que** le matériau du premier niveau de séparation (A1) est un tamis à mailles serrées, une tôle perforée ou un tissu.

14. Séparateur d'eau selon l'une des revendications 7 à 13, **caractérisé en ce qu'**un élément (31) servant à guider le flux et réduisant dans le sens du flux (S) la section de flux au sein de l'élément d'appui (20) est disposé dans l'élément d'appui (20).

15. Séparateur d'eau selon l'une des revendications 1 à 14, **caractérisé en ce qu'**une tubulure d'écoulement d'eau (17) est placée à l'extrémité (5) du boîtier (2) à laquelle se trouve la sortie (14) pour le carburant, directement au-dessus d'un fond (16) de l'espace collecteur (12).
